Europäisches Patentamt

European Patent Office

Office européen des brevets

(11) Veröffentlichungsnummer : **0 029 531**
**B1**

(12) **EUROPÄISCHE PATENTSCHRIFT**

(45) Veröffentlichungstag der Patentschrift :
**18.01.84**

(21) Anmeldenummer : **80106817.2**

(22) Anmeldetag : **05.11.80**

(51) Int. Cl.³ : **H 04 B   3/46**, H 04 L 25/20,
G 01 R 31/04

(54) **Verfahren und Anordnung zur Fehlerortung auf digitalen Übertragungsstrecken mit höherer Übertragungsgeschwindigkeit.**

(30) Priorität : **09.11.79 DE 2945392**

(43) Veröffentlichungstag der Anmeldung :
**03.06.81 Patentblatt 81/22**

(45) Bekanntmachung des Hinweises auf die Patenterteilung : **18.01.84 Patentblatt 84/03**

(84) Benannte Vertragsstaaten :
**AT BE CH DE FR GB IT LI NL SE**

(56) Entgegenhaltungen :
**DE-A- 2 826 675**
**DE-B- 2 632 193**
**GB-A- 2 019 167**
**US-A- 3 904 827**
**US-A- 4 112 293**

(73) Patentinhaber : **SIEMENS AKTIENGESELLSCHAFT**
**Berlin und München Wittelsbacherplatz 2**
**D-8000 München 2 (DE)**

(72) Erfinder : **Ebenhöh, Peter, Dipl.-Ing.**
**Gabriele-Münter-Strasse 17**
**D-8000 München 71 (DE)**

# Verfahren und Anordnung zur Fehlerortung auf digitalen Übertragungsstrecken mit höherer Übertragungsgeschwindigkeit

Die Erfindung betrifft ein Verfahren und eine Anordnung zur Fehlerortung während des Betriebs für digitale Übertragungsstrecken mit höherer Übertragungsgeschwindigkeit, die in periodischen Abständen Impulsregeneratoren für das Übertragungssignal enthaltende Zwischenstellen aufweisen, bei dem wenigstens ein zusätzliches Signal über wenigstens einen Teil der Übertragungsstrecke zu einer auswertenden Stelle übertragen wird.

Durch die Verbreitung von PCM-Grundsystemen mit Bitraten von 2 Mbit/s ergibt sich die Notwendigkeit, PCM-Übertragungssysteme zu entwickeln, mit denen eine Mehrzahl von Zeitmultiplexsignalen der PCM-Grundsysteme übertragen werden können. Als nächste Hierarchiestufen haben sich dabei PCM-Systeme mit 8, 34 und 140 Mbit/s als zweckmäßig erwiesen. Im Hinblick auf die Dämpfung im Übertragungsmedium sind für räumlich ausgedehnte Übertragungsstrecken Zwischenstellen erforderlich, in denen das übertragene digitale Signal hinsichtlich des Frequenzganges im Übertragungsmedium, außerdem hinsichtlich der Signalamplitude und der Signalphase für beide Übertragungsrichtungen entzerrt und regeneriert wird.

Bei mittels Kupferkabeln oder Lichtwellenkabeln aufgebauten Übertragungsstrecken werden die Zwischenstellen über einen zusätzlichen Gleichstromweg ferngespeist. Im Hinblick auf die Isolation des dafür verwendeten Kabels und die Stromaufnahme der Signalregeneratoren in den einzelnen Zwischenstellen ist von einer Fernspeisestelle aus nur eine bestimmte sehr begrenzte Anzahl an Zwischenstellen fernspeisbar. Eine Übertragungsstrecke kann damit aus mehreren Fernspeiseabschnitten bestehen.

Zur Fehlerortung in derartigen digitalen Übertragungsstrecken ist es bekannt, wenigstens ein zusätzliches Signal über wenigstens ein Teil der Übertragungsstrecke zu der auswertenden Stelle zu übertragen. Dabei kann es sich um einen sogenannten Pilotton handeln, der vom sendenden Leitungsendgerät aus über die gesamte Übertragungsstrecke übertragen wird, es ist auch bekannt, von jeder Zwischenstelle aus ein zusätzliches, mit einer Kennung für diese Zwischenstelle behaftetes Signal auszusenden, so daß bei Fehlen dieses Signals direkt auf einen Fehler in einer bestimmten Zwischenstelle oder der an diese angeschlossenen Kabelstrecke geschlossen werden kann.

Aus « Philip's Telecommunication Review » vom August 1979, Seiten 144 bis 160, ist ein digitales Übertragungssystem über Koaxialkabel mit einer Bitrate von 140 Mbit/s bekannt, bei dem zur Fehlerortung ein 10-kHz-Ton über den Fernspeiseweg übertragen wird. Die Adresse jeder Zwischenstelle wird mittels eines Adressencodierers dem 10-kHz-Ton aufmoduliert, so daß neben zusätzlichen Verstärkern für den 10-kHz-Ton auch ein Adressencodierer benötigt wird. Wegen der niedrigen Frequenz des verwendeten Pilottons sind die Ortungseinrichtungen blitzgefährdet ; im Hinblick auf den bei etwas höheren Frequenzen beginnenden Sperrbereich der üblicherweise verwendeten Fernspeiseweichen kann aber nicht auf einen Pilotton mit einer höheren Frequenz ausgewichen werden. Wegen der Verwendung des Fernspeiseweges ist das beschriebene Verfahren für jeden Fernspeiseabschnitt getrennt durchzuführen und damit in seiner Reichweite begrenzt.

Aus der DE-A1-2 826 675 ist ein Fehlerortungssystem für Datenübertragungsleitungen bekannt, das zwischen überwachenden Leitungsendgeräten angeordnete Paare von Impulsregeneratoren enthält. In den Leitungsendgeräten sind Fehlerdetektoren vorgesehen, die das Übertragungssignal auf Fehler überwachen und im Fehlerfall eine Alarmmeldung über eine zentrale Leitung and das jeweils im Signalweg vorher angeordnete Leitungsendgerät abgeben. Von diesem Leitungsendgerät wird dann der eigentliche Fehlerortungsvorgang ausgelöst, bei dem durch Aussendung eines zusätzlichen Signals eine Schleifenbildung zwischen den einzelnen Impulsregeneratoren eines Paares bewirkt wird. Aus der GB-A-2 019 167 ist ein Verfahren zur Fehlerortung während des Betriebes bekannt, bei dem jeder Impulsregenerator eine eigene besondere Adresse aufweist und diese Adresse zusammen mit den Adressen weiterer Impulsregeneratoren zur Fehlerortung in einem besonderen Datenkanal des Übertragungssystems eingesetzt wird. In einem zusätzlichen Zeitschlitz des Übertragungssignals wird dann auf den Anruf die Antwort des Impulsregenerators zu einer auswertenden Stelle übertragen. Durch die Übertragung des zusätzlichen Signals in einem bestimmten Zeitabschnitt anstelle des digitalen Übertragungssignals wird die Übertragungskapazität der digitalen Übertragungsstrecke entsprechend verringert.

Aus der US-A-3 904 827 ist ein Fehlerortungssystem für Leitungsverstärker von Verstärkerstellen in einer Übertragungsstrecke für analoge Signale bekannt, bei dem in den Verstärkerstellen ständig wirksame Fehlerortungsoszillatoren vorgesehen sind, die jeweils mit dem Eingang eines Leitungsverstärkers gekoppelt sind. Die von den Fehlerortungsoszillatoren abgegebenen Signale werden über einen Teil der Übertragungsstrecke zu einer Empfangsanordnung übertragen und dort ausgewertet. Die zusätzlichen Signale liegen in einem Frequenzbereich, in dem keine Trägerfrequenzsignale übertragen werden, so daß eine gegenseitige Beeinflussung beider Signalarten verhindert werden kann. Im Hinblick auf die niedrige Frequenz der von den Fehlerortungsoszillatoren abgegebenen Signale sind die Ortungseinrichtungen in diesem Falle erheblich blitzgefährdet.

Die Aufgabe der vorliegenden Erfindung besteht nun darin, ein Verfahren zur Fehlerortung der eingangs erwähnten Art zu entwickeln, das für digitale Übertragungsstrecken mit Bitfolgefrequenzen von über 100 Mbit geeignet ist, einen möglichst geringen Aufwand benötigt und von dem stark blitzgefährdeten und in seiner räumlichen Ausdehnung begrenzten Fernspeiseweg unabhängig ist.

Erfindungsgemäß wird die Aufgabe zum einen dadurch gelöst, daß zur adressenfreien Fehlerortung das zusätzliche Signal am Beginn der Übertragungsstrecke in diese eingespeist wird, daß das zusätzliche Signal im Übertragungsbereich des digitalen Signals liegt, daß das zusätzliche Signal in den Zwischenstellen vom Übertragungssignal abgetrennt, in einem von der Impulsregeneration für das digitale Signal unabhängigen Übertragungweg verstärkt, geformt und anschließend dem regenerierten Signal zugesetzt wird, aus dem vorher die Anteile ausgeblendet wurden, die durch das zusätzliche Signal ersetzt werden, daß in einer bestimmten Zwischenstelle ein bestimmter periodischer Abschnitt des zusätzlichen Signals in einer für diese Zwischenstelle charakteristischen Weise verändert wird und daß zur Fehlerortung in einer Fernspeiseweichen enthaltenden Kabelstrecke die in den einzelnen Zwischenstellen erzeugten zusätzlichen Signale in einem Frequenzbereich liegen, der im Hochpaßbereich der Fernspeiseweichen der Zwischenstellen bei etwa 0,2 ... 1 % der Nyquistfrequenz der digitalen Signale liegt.

Erfindungsgemäß wird die Aufgabe zum anderen dadurch gelöst, daß zur Fehlerortung mittels Adresse in jeder Zwischenstelle ein Zusätzliches, in seiner Frequenz jeweils unterschiedlichers Signal erzeugt und an die angeschlossene Übertragungsstrecke abgegeben wird, daß das zusätzliche Signal im Übertragungsbereich des digitalen Signals liegt, daß das zusätzliche Signal in den Zwischenstellen vom Übertragungssignal abgetrennt, in einem von der Impulsregeneration für das digitale Signal unabhängigen Übertragungsweg verstärkt, geformt und anschließend dem regenerierten digitalen Signal zugesetzt wird, aus dem vorher die Anteile ausgeblendet wurden, die durch das zusätzliche Signal ersetzt werden und daß zur Fehlerortung einer Fernspeiseweichen enthaltenden Kabelstrecke die in den einzelnen Zwischenstellen erzeugten zusätzlichen Signale frequenzmäßig im Hochpaßbereich der Fernspeiseweichen bei etwa 0,2 ... 1 % der Nyquistfrequenz der digitalen Signale liegen.

Besonders zweckmäßig ist die Verwendung des erfindungsgemäßen Verfahrens dadurch, daß bei der Übertragung digitaler Signale mit einer Bitrate von 140 Mbit/s die zusätzlichen Signale in einem 100-Hz-Raster im Frequenzbereich von 120 bis 200 kHz liegen.

Eine geringfügige unterschiedliche Einpegelung des zusätzlichen Signals in den einzelnen Zwischenstellen kann durch Summierung über die Strecke zu erheblichen Pegelfehlern führen, die dadurch vermieden werden, daß die Verstärkung des zusätzlichen Signals in dem von der Impulsregeneration getrennten Übertragungsweg in Abhängigkeit von der Amplitude eines weiteren zusätzlichen Signals, das vom sendenden Leitungsendgerät ausgeht, geregelt wird.

Durch Anwendung des bekannten Schaltzusatzes ist eine schnelle Fehlerortung dadurch möglich, daß bei einer Störung, die zum vorübergehenden Ausfall der Fernspeisung führt, wenigstens in einer der beiden, dem gestörten Abschnitt benachbarten Zwischenstellen nach dem erneuten Durchschalten der Fernspeisung eine Schleifenverbindung zwischen Ortungsrichtung und Gegenrichtung geschlossen bleibt und über diese Schleifenverbindung das zusätzliche Signal als Ortungssignal übertragen wird.

Eine zweckmäßige Anordnung zur Durchführung des erfindungsgemäßen Verfahrens ist im Anspruch 6 beschrieben.

Die Erfindung soll im folgenden anhand eines in der Zeichnung dargestellten Ausführungsbeispiels näher erläutert werden.

In der Zeichnung zeigt

Figur 1 einen Teil einer digitalen Übertragungsstrecke mit mehreren Zwischenstellen,

Figur 2 das Blockschaltbild eines Teils einer Zwischenstelle für eine Übertragungsrichtung und

Figur 3 ein Frequenzdiagramm zur Fig. 2.

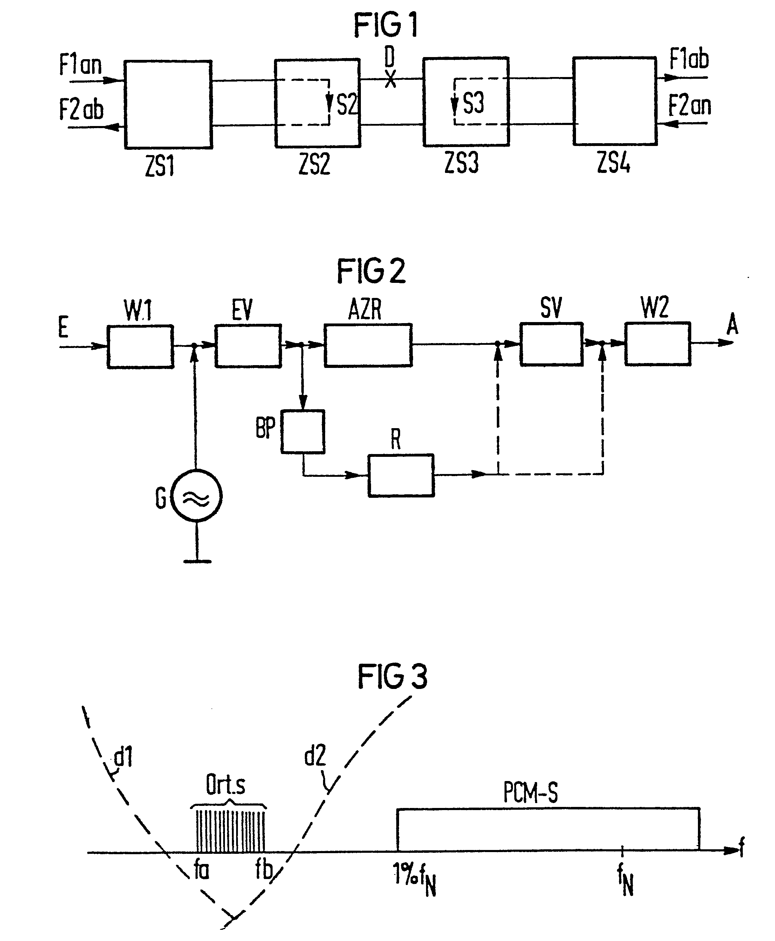

In der Fig. 1 ist ein aus vier Zwischenstellen ZS1 ... ZS4 und den entsprechenden Kabelstrecken bestehender Teil einer mittels Koaxialkabel aufgebauten digitalen Übertragungsstrecke dargestellt. Die Signale für die eine Übertragungsrichtung werden am Anschluß F1an in diesen Streckenteil eingespeist und am Anschluß F1ab an den nächsten Streckenteil abgegeben. In der Gegenrichtung werden die Signale am Anschluß F2an in den betrachteten Übertragungsstreckenbereich eingespeist und am Anschluß F2ab an den nachfolgenden Teil der Übertragungsstrecke übergeben. Die einzelnen Zwischenstellen enthalten dazu in bekannter Weise wenigstens einen Regenerator für jede Übertragungsrichtung und außerdem Fernspeise- und Fehlerortungseinrichtungen.

Eine kombinierte Fernspeise- und Fehlerortungseinrichtung stellt der aus der Trägerfrequenztechnik bekannte « Schaltzusatz » dar, der in jeder dieser Zwischenstellen enthalten ist. Zur Wirkungsweise dieses Schaltzusatzes sei zunächst angenommen, daß an der mit D bezeichneten Stelle die Übertragungsstrecke durch einen Kabelbruch gestört ist. In diesem Falle werden die über die Anschlüsse F1an, F2ab bzw. F1ab und F2an angeschlossenen Fernspeisegeräte automatisch abgeschaltet, so daß zunächst der gesamte Fernspeiseabschnitt stillgelegt ist. Dabei werden automatisch durch in jeder Zwischenstelle befindliche Relais die Schleifenverbindungen S2 bzw. S3 zwischen den beiden Fernspeiseadern geschaltet. Danach schalten sich die in den Endgeräten befindlichen Fernspeisegeräte wieder ein, wobei die Fernspeisespannung langsam gesteigert wird und durch den auf dem Übertragungsweg fließenden Fernspeisestrom die Schleifenverbindungen in den Zwischenstellen ZS1 bzw. ZS4 aufgehoben werden, während die Schleifen in ZS2 und ZS3 bestehen bleiben. Anschließend kann über die gesamte Schleife bzw. über beide Schleifen von den jeweiligen Leitungsendgeräten aus die Fehlerstelle durch Übertragung eines zusätzlichen Signals, das in jeder Zwischenstelle beeinflußt wird, geortet werden.

Eine ausführlichere Darstellung der Funktion des sogenannten Schaltzusatzes ist in der DE-A-28 33 022 enthalten.

Die Fig. 2 zeigt einen Teil einer der Zwischenstellen ZS1 ... ZS4 der Fig. 1 für eine Gesprächsrichtung. An den Eingang schließt sich die Fernspeiseweiche W1 an, durch die die Übertragungssignale vom Fernspeisestrom abgetrennt werden. Zur Kompensation des Kabelfrequenzganges und der Kabeldämpfung dient der an die Weiche angeschlossene Entzerrerverstärker EV, an den sich der Amplituden- und Zeitregenerator AZR anschließt, in dem die digitalen Signale hinsichtlich der Amplitude und der zeitlichen Lage regeneriert werden. Mit dem Ausgang dieses Regenerators ist ein Sendeverstärker SV verbunden, der ein Sendesignal erzeugt, das über die zweite Fernspeiseweiche W2 an den Ausgang A der Zwischenstelle und damit an die nächste Kabelstrecke abgegeben wird. Zusätzlich ist ein Generator G vorgesehen, der einen die Zwischenstelle bezeichnenden Kennton erzeugt und diesen am Eingang des Entzerrerverstärkers EV in den Übertragungsweg einspeist. Der Anschluß des Generators G ist dabei nicht an diesen Einspeisepunkt gebunden, es ist auch eine Einspeisung am Ausgang des Entzerrerverstärkers EV möglich. Dies hängt im wesentlichen von dem Ausgangspegel des Generators G ab. Mit dem Ausgang des Entzerrerverstärkers EV ist ein Bandpaß BP verbunden, der die Vielzahl der von den Generatoren G der einzelnen Zwischenstellen erzeugten Kenntöne aus dem Übertragungssignal herausfiltert und über einen Regler R einem Eingang des Sendeverstärkers SV oder dem Ausgang dieses Verstärkers zuführt. Der Regler R dient dabei zur Einstellung der Amplitude dieser Ortungssignale. Die Regelung erfolgt über einen mit dem Ausgang des Reglers R verbundenen frequenzabhängigen Dämpfungsvierpol, der über einen Regelverstärker mit dem Regeleingang des Reglers R verbunden ist..

Zur Erläuterung der Funktion der Anordnung nach der Fig. 2 dient das in der Fig. 3 dargestellte Frequenzdiagramm. Im Frequenzdiagramm ist das Ortungssignal Orts und das PCM-Signal PCMS dargestellt. Die beiden Frequenzgrenzen des Ortungssignals sind mit $f_a$ und $f_b$ bezeichnet, während die Lage des PCM-Signals durch die Nyquistfrequenz und durch 1 % dieser Frequenz dargestellt ist. Mit « d1 » ist der Dämpfungsverlauf der ersten Weiche W1 und mit « d2 » der Dämpfungsverlauf des Bandpasses im Tiefpaßbereich im interessierenden Frequenzbereich dargestellt.

Durch die erste Weiche W1 wird also das zu übertragende PCM-Signal zusammen mit dem Ortungssignal vom Fernspeisestrom abgekoppelt und an den Entzerrerverstärker EV abgegeben, der außerdem vom Generator G eine zusätzliche Schwingung erhält, die hinsichtlich ihrer Frequenz die betreffende Zwischenstelle kennzeichnet, also einen « Kennton » darstellt. Im vorliegenden Falle liegen die beiden Frequenzgrenzen $f_a$ und $f_b$ des Ortungssignals bei 120 und 140 kHz. Dieser Frequenzbereich ist im 100-Hz-Raster unterteilt, so daß sich 200 Kennfrequenzen ergeben, die 200 möglichen Zwischenstellen entsprechen. Durch den ersten Bandpaß BP1 werden diese Schwingungen entsprechend den 200 Kennfrequenzen, die in ihrer Gesamtheit das Ortungssignal darstellen, vom Übertragungssignal abgetrennt und an den Regler R abgegeben, der ein regelbares Dämpfungsglied darstellt und den Pegel des Ortungssignals einstellt. Vom Ausgang des Reglers R wird das Ortungssignal entweder dem Eingang oder dem Ausgang des Sendeverstärkers SV zugeführt. Der Anschluß hängt davon ab, ob es sich bei dem Sendeverstärker SV um einen Analogverstärker oder um einen Schaltverstärker handelt. Handelt es sich um einen Analogverstärker, dann wird das Ausgangssignal des Reglers R dem Eingang des Sendeverstärkers SV zugeführt. Wird der Sendeverstärker SV als Schaltverstärker betrieben, dann werden Komponenten erzeugt, die im Frequenzbereich des Ortungssignals liegen. In diesem Fall enthält der Sendeverstärker SV einen zusätzlichen Hochpaß, dessen Dämpfungsverlauf dem Tiefpaßanteil des Bandpasses BP entspricht und durch den die unerwünschten Komponenten unterdrückt werden. Die Ausgangssignale des Reglers R werden dann am Ausgang des Sendeverstärkers SV dem Übertragungssignal zugesetzt.

**Ansprüche**

1. Verfahren zur Fehlerortung während des Betriebs für digitale Übertragungsstrecken mit höherer Übertragungsgeschwindigkeit, die in periodischen Abständen Impulsregeneratoren für das Übertragungssignal enthaltende Zwischenstellen aufweisen, bei dem wenigstens ein zusätzliches Signal über wenigstens einen Teil der Übertragungsstrecke zu einer auswertenden Stelle übertragen wird, dadurch gekennzeichnet, daß zur adressenfreien Fehlerortung das zusätzliche Signal am Beginn der Übertragungsstrecke in diese eingespeist wird, daß das zusätzliche Signal im Übertragungsbereich des digitalen Signals liegt, daß das zusätzliche Signal in den Zwischenstellen vom Übertragunssignal abgetrennt, in einem von der Impulsregeneration für das digitale Signal unabhängigen Übertragungsweg verstärkt, geformt und anschließend dem regenerierten Signal zugesetzt wird, aus dem vorher die Anteile ausgeblendet wurden, die durch das zusätzliche Signal ersetzt werden, daß in einer bestimmten Zwischenstelle ein bestimmter periodischer Abschnitt des zusätzlichen Signals in einer für diese Zwischenstelle charakteristischen Weise verändert wird und daß zur Fehlerortung in einer Fernspeiseweichen enthaltenden Kabelstrecke die in den einzelnen Zwischenstellen erzeugten zusätzlichen Signale in einem Frequenzbereich liegen, der im Hochpaßbereich der Fernspeiseweichen der Zwischenstellen bei etwa 0,2 ... 1 % der Nyquistfrequenz der digitalen Signale liegt.

2. Verfahren zur Fehlerortung während des Betriebs für digitale Übertragungsstrecken mit höherer Übertragungsgeschwindigkeit, die in periodischen Abständen Impulsregeneratoren für das Übertragungssignal enthaltende Zwischenstellen aufweisen, bei dem wenigstens ein zusätzliches Signal über wenigstens einen Teil der Übertragungsstrecke zu einer auswertenden Stelle übertragen wird, dadurch gekennzeichnet, daß zur Fehlerortung mittels Adresse in jeder Zwischenstelle ein zusätzliches, in seiner Frequenz jeweils unterschiedliches Signal erzeugt und an die angeschlossene Übertragungsstrecke abgegeben wird, daß das zusätzliche Signal im Übertragungsbereich des digitalen Signals liegt, daß das zusätzliche Signal in den Zwischenstellen vom Übertragungssignal abgetrennt, in einem von der Impulsregeneration für das digitale Signal unabhängigen Übertragungsweg verstärkt, geformt und anschließend dem regenerierten digitalen Signal zugesetzt wird, aus dem vorher die Anteile ausgeblendet wurden, die durch das zusätzliche Signal ersetzt werden und daß zur Fehlerortung einer Fernspeiseweichen enthaltenden Kabelstrecke die in den einzelnen Zwischenstellen erzeugten zusätzlichen Signale frequenzmäßig im Hochpaßbereich der Fernspeiseweichen bei etwa 0,2 ... 1 %' der Nyquistfrequenz der digitalen Signale liegen.

3. Verfahren nach Anspruch 1 oder 2, dadurch gekennzeichnet, daß bei der Übertragung digitaler Signale mit einer Bitrate von 140 Mbit/s die zusätzlichen Signale in einem 100 Hz-Raster im Frequenzbereich von 120 bis 200 kHz liegen.

4. Verfahren nach einem der Ansprüche 1 bis 3, dadurch gekennzeichnet, daß die Verstärkung des zusätzlichen Signals in dem von der Impulsregeneration getrennten Übertragungsweg in Abhängigkeit von der Amplitude eines weiteren zusätzlichen Signals, das vom sendenden Leitungsendgerät ausgeht, geregelt wird.

5. Verfahren nach einem der Ansprüche 1 bis 4, dadurch gekennzeichnet, daß bei einer Störung, dei zum vorübergehenden Ausfall der Fernspeisung führt, wenigstens in einer der beiden, dem gestörten Abschnitt benachbarten Zwischenstellen nach dem erneuten Durchschalten der Fernspeisung eine Schleifenverbindung zwischen Ortungsrichtung und Gegenrichtung geschlossen bleibt und über diese Schleifenverbindung das zusätzliche Signal als Ortungssignal übertragen wird.

6. Anordnung zur Durchführung des Verfahrens nach einem der Ansprüche 1 bis 5 in einer Zwischenstelle, die eingangsseitig und ausgangsseitig jeweils eine Fernspeiseweiche (W1 ; W2) und außerdem eingangsseitig einen Entzerrerverstärker (EV), einen diesem nachgeschalteten Amplituden- und Zeitregenerator (AZR) und einen Sendeverstärker (SV) enthält, dadurch gekennzeichnet, daß ein Generator G zur Erzeugung eines Kenntons vorgesehen ist, dessen Ausgang in Abhängigkeit vom Pegel des vom Generator G abgegebenen Kenntons entweder mit dem Eingang oder mit dem Ausgang des Entzerrerverstärkers (EV) verbunden ist, daß ein mit dem Ausgang des Entzerrerverstärkers (EV) verbundener Bandpaß (BP) mit einem Durchlaßbereich entsprechend dem Frequenzbereich des aus der Gesamtheit aller Kenntöne der Übertragungsstrecke bestehenden Ortungssignals vorgesehen ist, an dessen Ausgang ein als regelbares Dämpfungsglied ausgebildeter Regler (R) angeschlossen ist, dessen Ausgang an den Ausgang des Sendeverstärkers (SV) angeschlossen ist, sofern der Sendeverstärker ein Schaltverstärker ist, und daß der Ausgang des Reglers (R) an den Eingang des Sendeverstärkers (SV) angeschlossen ist, sofern der Sendeverstärker ein Analogverstärker ist.

**Claims**

1. Method for error location during operation for digital transmission links which have a high transmission speed and which have, at periodic intervals, intermediate stations which include pulse regenerators for the transmission signal, wherein at least one additional signal is transmitted to an analyzing station via at least one section of the transmitting link, characterised in that for the address-free error location the additional signal is fed into the transmission link at the beginning thereof, that the additional signal is arranged in the transmission range of the digital signal, that in the intermediate stations the additional signal is separated from the transmission signal and in a transmission path, which is independent of the pulse regeneration for the digital signal, it is amplified, formed and subsequently added to the regenerated signal, from which the portions, which are replaced by the additional signal, have previously been gated out, that in a particular intermediate station a particular periodic section of the additional signal is changed in a manner which is characteristic to this intermediate station, and that for the error location in a cable link including remote-feed separating filters, the additional signals produced in the individual intermediate stations lie in a frequency range which is arranged in the high-pass filter range of the remote-feed separating filters of the intermediate stations at approx. 0.2 ... 1 % of the Nyquist frequency of the digital signals.

2. Method for error location during operation for digital transmission links which have a high transmission speed and which have, at periodic intervals, intermediate stations which include pulse regenerators for the transmission signal, wherein at least one additional signal is transmitted to an analyzing station via at least one section of the transmitting link, characterised in that for the error location by means of an address, an additional signal respectively different in frequency, is produced in each intermediate station and transmitted to the connected transmission link, that the additional signal is arranged in the transmission range of the digital signal, that in the intermediate stations the additional signal is separated from the transmission signal and in the transmission path, which is independent of the pulse regeneration for the digital signal, it is amplified, formed and subsequently added to the regenerated digital signal, from which the portions, which are replaced by the additional signal, have previously been gated out, and that for the error location of a cable link including remote-feed separating filters, the additional signals produced in the individual intermediate stations lie, in terms of frequency, in the high-pass filter range of the remote-feed separating filters at approximately 0.2 ... 1 % of the Nyquist frequency of the digital signals.

3. Method as claimed in claim 1 or 2, characterised in that during the transmission of digital signals at a bit rate of 140 Mbit/s the additional signals lie in a 100 Hz-raster in the frequency range of 120 to 200 kHz.

4. Method as claimed in one of claims 1 to 3, characterised in that the amplification of the additional signal in the transmission path which is independent of the pulse regeneration, is controlled in dependence upon the amplitude of a further additional signal emanating from the transmitting line terminal device.

5. Method as claimed in one of claims 1 to 4, characterised in that in the event of interference leading to temporary failure of the remote feed, following the renewed through-connection of the remote feed, at least in one of the two intermediate stations, which are adjacent to the disturbed section, a loop connection between the locating direction and counter-direction remains closed and the additional signal is transmitted as a locating signal via this loop connection.

6. Arrangement for the implementation of the method as claimed in one of claims 1 to 5 in an intermediate station which at the input end and at the output end respectively comprises a remote-feed separating filter (W1 ; W2) and at the input end further comprises an equalizer amplifier (EV), a following amplitude and time regenerator (AZR) and a transmitting amplifier (SV), characterised in that there is provided a generator G which serves to generate an identification tone and whose output, in dependence upon the level of the identification tone emitted by the generator G, is either connected to the input or to the output of the equalizer amplifier (EV), that there is provided a band-pass filter (BP) which is connected to the output of the equalizer amplifier (EV) and has a transmission range corresponding to the frequency range of the locating signal consisting of the total of all identification tones of the transmission link, to the output of which band-pass filter a regulator (R) constructed as a controllable attenuation element is connected if the transmitting amplifier is a switching amplifier, and that the output of the regulator (R) is connected to the input of the transmitting amplifier (SV) if the transmitting amplifier is an analogue amplifier.

## Revendications

1. Procédé pour la localisation de défauts en cours de fonctionnement pour des lignes de transmission numériques à vitesse de transmission supérieure qui comportent des régénérateurs d'impulsions, situés à des intervalles périodiques, pour des postes intermédiaires contenant le signal de transmission, et dans lequel au moins un signal supplémentaire est transmis à un poste d'évaluation, par l'intermédiaire d'au moins une partie de la ligne de transmission, caractérisé par le fait que pour la localisation de défauts sans adresse le signal supplémentaire est introduit dans la ligne de transmission au début de celle-ci, que le signal supplémentaire se trouve dans la gamme de transmission du signal numérique, que le signal supplémentaire est séparé du signal de transmission dans les postes intermédiaires, amplifié dans une voie de transmission indépendante de la régénération d'impulsions pour le signal numérique, mis en forme et ensuite ajouté au signal régénéré duquel ont été précédemment supprimées les parties qui sont remplacées par le signal supplémentaire, que dans un poste intermédiaire déterminé une section périodique déterminée du signal supplémentaire est transformée d'une manière caractéristique pour ce poste intermédiaire, et que pour la localisation des défauts dans une section de câble contenant des aiguillages d'alimentation à distance les signaux supplémentaires produits dans les postes intermédiaires individuels se trouvent dans une gamme de fréquences qui se trouve dans la gamme passe-haut des aiguillages d'alimentation à distance des postes intermédiaires, sur environ 0,2 ... 1 % de la fréquence de Nyquist des signaux numériques.

2. Procédé pour la localisation de défauts en cours de fonctionnement pour des lignes de transmission numériques à vitesse de transmission supérieure qui comportent des régénérateurs d'impulsions, situés à des intervalles périodiques, pour des postes intermédiaires contenant le signal de transmission, et dans lequel au moins un signal supplémentaire est transmis à un poste d'évaluation, par l'intermédiaire d'au moins une partie de la ligne de transmission, caractérisé par le fait que pour la localisation de défauts au moyen d'une adresse dans chaque poste intermédiaire un signal supplémentaire de fréquence respectivement différente est produit et délivré à la ligne de transmission raccordée, que le signal supplémentaire se trouve dans la gamme de transmission du signal numérique, que le signal supplémentaire est séparé du signal de transmission dans les postes intermédiaires, est amplifié dans une voie de transmission indépendante de la régénération d'impulsions pour le signal numérique, mis en forme et ensuite ajouté au signal numérique régénéré duquel ont été précédemment supprimées les parties qui sont remplacées par le signal supplémentaire, et que pour la localisation des défauts les signaux supplémentaires produits dans les postes intermédiaires individuels se trouvent, pour ce qui est de leur fréquence, dans la gamme passe-haut des aiguillages d'alimentation à distance, sur environ 0,2 ... 1 % de la fréquence de Nyquist des signaux numériques.

3. Procédé suivant la revendication 1 ou 2, caractérisé par le fait que lors de la transmission de signaux numériques avec un débit binaire de 140 Mbits/s les signaux supplémentaires sont situés suivant une grille de 100 Hz dans la gamme de fréquences de 120 à 200 kHz.

4. Procédé suivant l'une des revendications 1 à 3, caractérisé par le fait que l'amplification du signal supplémentaire dans la voie de transmission isolée de la régénération d'impulsions est réglée en fonction de l'amplitude d'un autre signal supplémentaire qui provient du poste terminal de ligne d'émission.

5. Procédé suivant l'une des revendications 1 à 4, caractérisé par le fait que dans le cas d'une perturbation qui conduit à une panne temporaire de l'alimentation à distance, un couplage en boucle entre le sens de localisation et le sens opposé reste fermé après la remise en circuit de l'alimentation à distance au moins dans un des deux postes intermédiaires voisins de la section perturbée, et que le signal supplémentaire est transmis, en tant que signal de localisation, par l'intermédiaire de ce couplage en boucle.

6. Dispositif pour la mise en œuvre du procédé suivant l'une des revendications 1 à 5, dans un poste intermédiaire qui contient respectivement côté entrée et côté sortie un aiguillage d'alimentation à distance (W1 ; W2) et en outre, côté entrée, un amplificateur de correction (EV), un régénérateur d'amplitude et de temps (AZR) monté en aval, et un amplificateur d'émission (SV), caractérisé par le fait que pour la production d'un son caractéristique il est prévu un générateur G dont la sortie est reliée soit à l'entrée soit à la sortie de l'amplificateur de correction (EV), en fonction du niveau du son caractéristique délivré par le régénérateur G, qu'il est prévu un filtre passe-bande (BP) qui est couplé à la sortie de l'amplificateur de correction (EV) et qui possède une bande passante qui correspond à la gamme de fréquences du signal de localisation constitué par la totalité des sons caractéristiques de la ligne de transmission, et à la sortie duquel est raccordé un circuit de réglage (R) se présentant sous la forme d'un élément d'affaiblissement réglable et dont la sortie est reliée à la sortie de l'amplificateur d'émission (SV), dans la mesure où l'amplificateur d'émission est un amplificateur de commande, et que la sortie du circuit de réglage (R) est reliée à l'entrée de l'amplificateur d'émission (SV) dans la mesure où l'amplificateur d'émission est un amplificateur analogique.

# FIG 1

F1an →

F2ab ←

ZS1    ZS2    ZS3    ZS4

S2    D    S3

F1ab →

F2an ←

# FIG 2

E →    W.1    EV    AZR    SV    W2    → A

G ≈

BP

R

# FIG 3

d1    d2

Ort.s

PCM-S

fa    fb    1%fN    fN    f